# EUROPEAN PATENT SPECIFICATION

(11) **EP 1 766 264 B1**
(45) Date of publication and mention of the grant of the patent: **06.08.2008**
(21) Application number: 05761468.7
(22) Date of filing: 10.06.2005
(51) Int. Cl.: F16H 23/04

(54) **MECHANICAL STEPLESS SPEED CHANGE GEAR**
MECHANISCHES STUFENLOSES GETRIEBE
ENGRENAGE MECANIQUE DE CHANGEMENT DE VITESSES A VARIATION CONTINUE

(30) Priority: 15.06.2004 IT TO20040493
(43) Date of publication of application: 28.03.2007
(73) Proprietor: Orbitech Engineering S.r.l., 10100 Torino (IT)
(72) Inventor: CONTARDO, Giovanni, I-10050 Salbertrand (IT)
(74) Representative: Garavelli, Paolo
(86) International application number: PCT/IT2005/000329
(87) International publication number: WO 2005/124191

(56) References cited:
- FR-A- 770 147
- FR-A- 2 305 653
- GB-A- 1 053 060
- US-A- 1 679 924

## Description

The present invention refers to a mechanical stepless speed change gear equipped with a transmission kinematism with front meshing.

In the field of stepless speed change gears of the mechanical type, the only known systems are based on friction (variable pulleys and "V" belts such as the Variomatic gearbox marketed by company DAF or the motion transmission system with stepless speed change in Fischer turns, which used alternate current motors, thereby with a constant number of revolutions), with the limitation, for obvious known reasons, on the transmitted torque value.

In the field of torque and speed change gears of the oleodynamic type, there are gearboxes equipped with a torque converter, that however have as well stepped transmission rations and absorb a non-neglectable part of the power that is dissipated in internal frictions due to viscous liquid blows-by in the impeller interface areas.

In the field of reducers, the state of the art instead provides for various arrangements, that range from worm screws to gear cascade, till the bevel gear pairs, always anyway based on the gear-type transmission and consequently always constrained to fixed ratios. Therefore, there is no possibility of changing the number of revolutions apart from with a ratio change and there is no possibility of stopping the vehicle or the car in general, unless by mechanically disconnecting motor from transmission.

FR-A-2 305 653 discloses a speed change gear according to the preamble of Claim 1.

Object of the present invention is therefore solving the above prior art problems by providing a mechanical stepless speed change gear that can be adapted to situations which provide in particular the use of motors with constant number of revolutions or with reduced variability ranges.

Another object of the present invention is providing a mechanical stepless speed change gear which, differently from known automatic gearboxes, allows keeping constant the number of revolutions of the engine to which it is coupled, which, for this reason, can be indifferently, in addition to an explosion engine as usually known, an endothermal, electric, hydraulic or permanent magnet motor, of the type with constant rotation.

Moreover, an object of the present invention is providing a mechanical stepless speed change gear which, differently from known speed change gears, allows transmitting even very high outputs.

The above and other objects and advantages of the invention, as will result from the following description, are obtained by a mechanical stepless speed change gear as claimed in claim 1. Preferred embodiments and non-trivial variations of the present invention are the subject matter of the dependent claims.

The present invention will be better described by some preferred embodiments thereof, provided as a nonlimiting example, with reference to the enclosed drawings, in which:
- FIG. 1 shows a sectional view of a preferred embodiment of the mechanical stepless speed change gear according to the present invention;
- FIG. 2 shows a sectional view of an alternative embodiment of the mechanical stepless speed change gear according to the present invention;
- FIG. 3 shows a sectional view of another alternative embodiment of the mechanical stepless speed change gear according to the present invention; and
- FIG. 4 shows a schematic sectional view of still another embodiment of the mechanical stepless speed change gear according to the present invention.

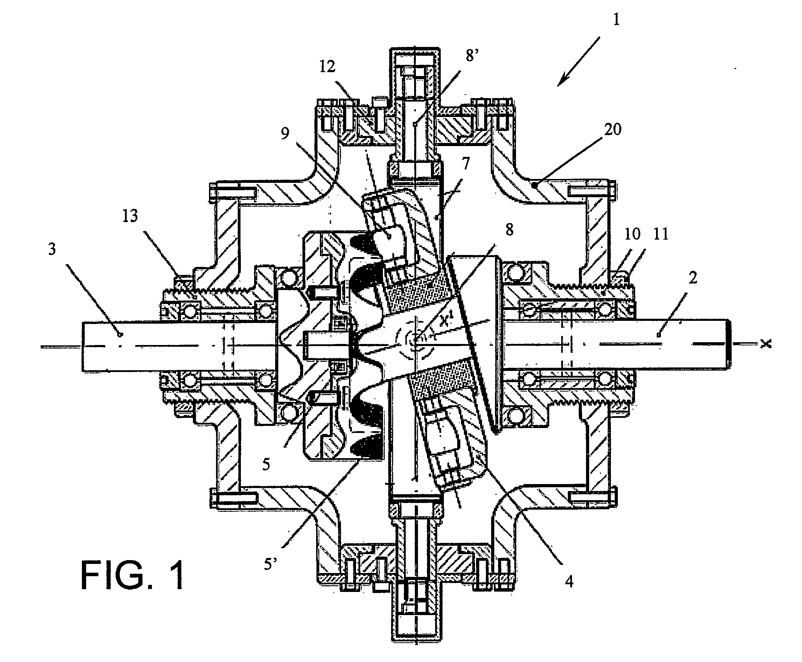

With reference to FIG. 1, it is possible to note in particular a preferred embodiment of the speed change gear 1 according to the present invention: the speed change gear 1 is based on a new type of kinematism or kinematic coupling with front meshing.

Such kinematism comprises a first and a second transmission shafts, respectively 2 and 3, preferably and respectively representing a motion-entry shaft to and a motion-exit shaft from the speed change gear 1, which respectively support a driving system 4 and a driven system 5, which are mutually facing, and described below, and frontally mutually cooperating by means of respective first and second mechanical cooperating means.

The first transmission shaft 2, having a rotation axis X, has a slanted end portion 4', having a rotation axis X', on which the driving system 4, equipped with the first mechanical cooperating means, is idly and potentially rotatingly keyed, preferably by interposing a revolving bearing or bushing. Such geometry, that allows two types of independent movements on the same axis, performs a coupling with rotating movement around the rotation axis X' of the slanted end portion 4' that confers a movement in space, and with a traditional rotary movement around axis X that confers a movement in the plane; such two above movements are transmitted to the driven system 5, equipped with the second mechanical cooperating means, preferably made as a toothed system 5' mentioned below, supported by the second transmission shaft 3 having, for example, the rotation axis X. The rotation direction of the second entry rotating shaft 3 will always be the inverse of the rotation direction of the first transmission shaft 2. Another property of the present invention is the complete reversibility of the speed change gear 1.

The operating principle of the speed change gear 1 according to the present invention is also characterised by the possibiliy of the driving system 4 moving radially, with consequent variation of the contact points between the two systems 4 and 5, and therefore with consequent lever arm variation, to allow changing the output mechanical ration.

The operating principle of the speed change gear according to the present invention is characterised by the particular movement of the driving system 4, with a sinusoidal behaviour, or by the radial movement provided by the first transmission shaft 2, and by the waving movement provided by the slanted end portion 4' integral with the shaft 2 itself.

The driving system 4 is further pivoted onto a ring 7 through a first pin or oscillating spider 8; the ring 7 is in turn pivoted onto a second pin or oscillating spider 8' that in turn slides on a cylinder placed on a slider 12 kept in position by guides which are integral with an external housing box 20 containing the speed change gear 1 according to the present invention. All movements are obtained by the two oscillating spiders 8, 8', that allow a 360°-oscillation of the whole apparatus assembled on the ring 7. Moreover, a further radial movement of the above apparatus is in turn disengaged, preferably by the slider 12, from the possibility of having both an axial and a longitudinal movement with respect to the shaft rotation, and at the same time for keeping in its working position the whole driving system 4 with respect to the driven system 5.

The above described speed change gear 1 thereby also implies the possibility of changing the peripheral orbit of the driving system 4 through at least one first axial adjusting device, preferably comprising a first threaded bush 10, preferably containing radial and/or axial bearings for rotating the first transmission shaft 2 and actuated by a ring nut 11, which in turn axially displaces the first transmission shaft 2 itself with respect to the driving system 4. All this implies a peripheral axial offset of the driving system 4, and especially of its first mechanical cooperating means, which are preferably made as a plurality of rollers 9, which slides on the slanted end portion 4' of the first transmission shaft 2, making such first mechanical cooperating means work in a mechanical cooperation point, which is more or less peripheral, of the driven system 4, originating both a speed and a torque change.

It is necessary to underline, among the other things, that the bush 10 can be not only manually adjusted as shown in FIG. 1, but can be even driven by motored actuating means of the electric type or with an electronic control, which, suitable calibrated, automatically finds the most suitable speed change of the speed change gear 1 by operating on the first transmission shaft 2 according to the desired situation.

On the other hand, it is possible to provide a second axial adjusting device, comprising a second threaded bush 13, preferably containing radial and/or axial bearings for rotating the second transmission shaft 3, which allows axially adjusting the position of the driven system 5, namely allows taking to the right position, and with an adequate play, the second mechanical cooperating means with respect to the first mechanical cooperating means, like the rollers 9 in the embodiment of FIG. 1, in order to optimally make the two systems 4 and 5 work.

The speed change gear 1 according to the present invention thereby allows operating with engines with constant speeds, not disengaging the motion with clutches or joints, reaching very high outputs or torques, and, last but not least, providing the advantage that, taking the first transmission shaft 2 into the intersection point between axis X and axis X' at the height of the axis of rollers 9, a stalling position is reached in which the rollers 9 themselves are exactly placed in a medium point of the toothed system 5' of the driven system 5; consequently, though rotating the first transmission shaft 2, the movement to the second transmission shaft 3 cannot be impressed any more. All this offers the possibility of being able to take the second transmission shaft 3, though with the rotating engine, not only to a braking, but even to the complete stop of its rotary movement. Therefore, as mentioned above, there is no need of either slowing the motion, or to interpose possible clutches.

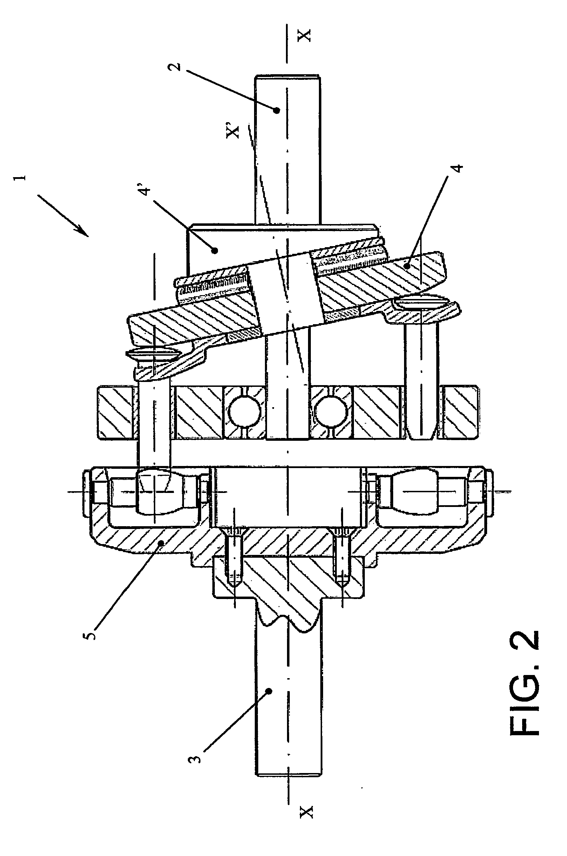

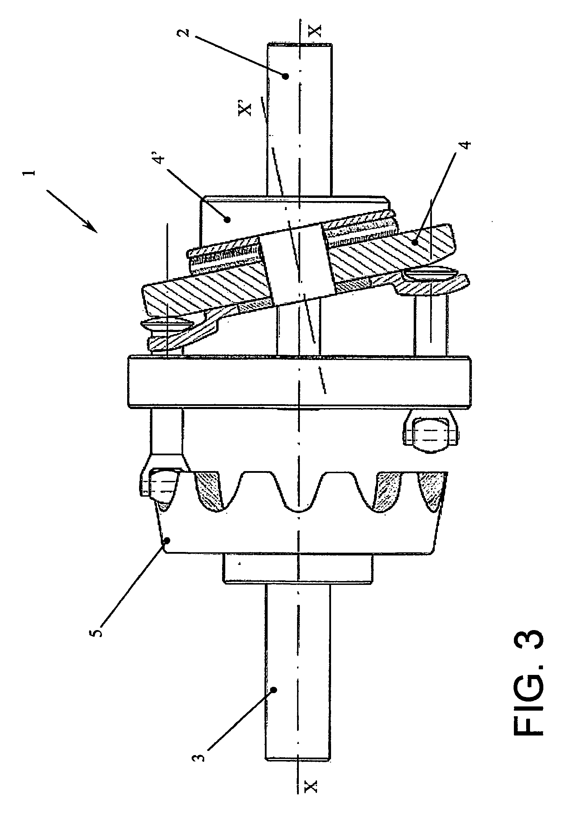

Obviously, the stepless speed change gear 1 can be subjected to further modifications or variations which are wholly within the range of a normal technician in the art, such as for example those shown in FIG. 2 and 3, in which different embodiments of the mechanical cooperating means of the systems 4 and 5 can be seen, though remaining within the scope of the same inventive principle.

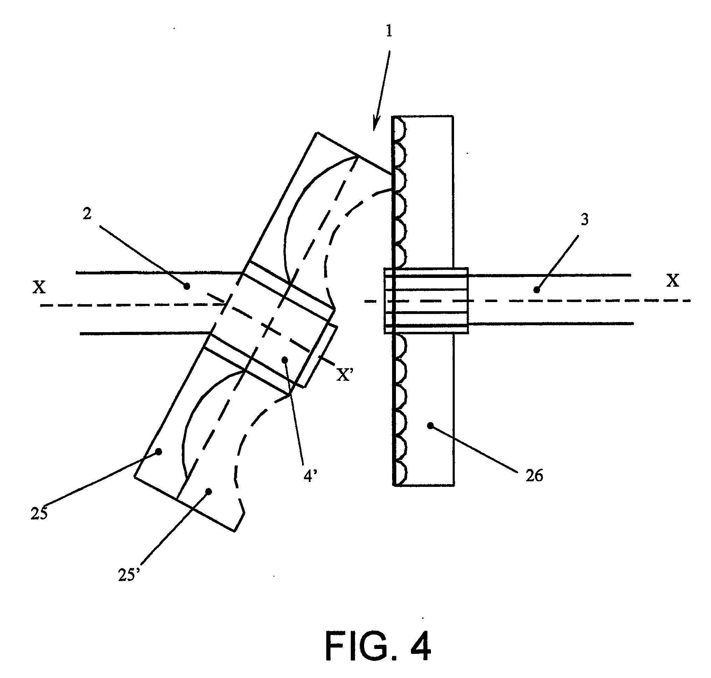

With reference now to FIG. 4, it is possible to note a schematic representation showing another possible embodiment of a speed change gear 1 complying with the operating principle of the present invention.

In such embodiment, the first mechanical cooperating means are a first toothed wheel 25 cooperating with the second mechanical cooperating means made as a second toothed wheel 26 supported by the second transmission shaft 3 having, for example a rotation axis X.

In order to allow a coupling between the two toothed wheels 25, 26 following the axial displacements of the first toothed wheel 25 (in FIG. 4, the axial displacement of the first toothed wheel 25 on the slanted portion 4' is shown by a dashed line with the first toothed wheel designated as 25'), the second transmission shaft 3 is equipped with a grooved coupling with the second toothed wheel 26 which allows this latter one to axially move on the transmission shaft 3 itself, in order to always guarantee the mechanical coupling with the first toothed wheel 25 with which it frontally meshes.

The two toothed wheels 25, 26 can mesh on very different circumferences, due to the movement of the first toothed wheel 5 on the slanted end portion 4', so that it is necessary to arrange a very wide tooth involute.

In general, since, in addition to the fact that the two toothed wheels 25, 26 slidingly meshes, it has been taken into account to provide them, instead of with conventional teeth, with small bearings arranged on the periphery, in order to provide a better meshing with the front wheel teeth in the various axis-offset situations.

In conclusion, the speed change gear 1 according to the present invention offers the following advantages with respect to known technologies, especially in the motor-vehicles field:
- doing without the traditional gearbox with a cascade of gears;
- steppingly changing the transmission ratios (without jerks between one speed change and another);
- doing without the clutch assembly;
- an engine which operates even at constant speed, with low rpm, with the maximum torque;
- possibility of using all types of engines: as a nonlimiting example, it is possible to use the speed change gear 1 according to the present invention coupled with internal combustion engines, electric motors, pneumatic motors, permaneng magnets motors, constant speed motors or motors with minimum speed variations;
- lower energy consumption due to the lower weight, the choice of the most suitable transmission ratio, the lower friction, the constant operation with a maximum torque speed.

All that has been described above implies a lower environmental impact due to the lower fuel consumption or the consumption of another source of energy, and, last but not least, a higher comfort given by the operating linearity of the stepless speed change gear with respect to traditional gearboxes.

## Claims

1. Mechanical stepless speed change gear (1) equipped with a transmission kinematism with front meshing comprising a first transmission shaft (2) and a second transmission shaft (3), said first transmission shaft (2) being equipped with a slanted end portion (4') supporting a driving system (4) equipped with first mechanical cooperating means, said second transmission shaft (3) supporting a driven system (5) equipped with second mechanical cooperating means cooperating with said first mechanical cooperating means, said first driving system (4) having a semi-sinusoidal movement, defined by a radial movement impressed by said first transmission shaft (2), and an ondulating movement impressed by said slanted end portion (4'), changing the mechanical cooperation means with said driven system (5), **characterised in that** said driving system (4) is pivoted on a ring (7) through a first pin or oscillating spider (8) and that said ring (7) is pivoted on a second pin or oscillating spider (8') sliding in a cylinder placed on a slider (12) placed by guides which are integral with an external housing box (20) containing said speed change gear (1).

2. Speed change gear (1) according to claim 1, **characterised in that** it comprises at least one first axial adjusting device of said first transmission shaft (2).

3. Speed change gear (1) according to claim 2, **characterised in that** said first axial adjusting device comprises a first threaded bush (10) containing radial and/or axial bearings for rotating said first transmission shaft (2).

4. Speed change gear (1) according to claim 1, **characterised in that** it comprises at least one second axial adjusting device of said second transmission shaft (3).

5. Speed change gear (1) according to claim 4, **characterised in that** said second axial adjusting device comprises a second threaded bush (13) containing radial and/or axial bearings for rotating said second transmission shaft (3).

6. Speed change gear (1) according to claim 1, **characterised in that** said first mechanical cooperating means are a plurality of rollers (9).

7. Speed change gear (1) according to claim 1, **characterised in that** said first mechanical cooperating means are a first toothed wheel (25).

8. Speed change gear (1) according to claim 1, **characterised in that** said second mechanical cooperating means are a toothed system (5').

9. Speed change gear (1) according to claim 1, **characterised in that** said second mechanical cooperating means are a second toothed wheel (26).

10. Speed change gear (1) according to claim 1, **characterised in that** said first axial adjusting device is driven by electric or electronic motored actuating means.

## Patentansprüche

1. Mechanischer kontinuierlicher Drehzahlwandler (1), der mit einem Getriebe mit frontaler Klauenkupplung ausgestattet ist, das eine erste Antriebswelle (2) und eine zweite Antriebswelle (3) enthält, die genannte erste Antriebswelle (2) ist mit einem geneigten Endstück (4') ausgestattet, das ein Steuersystem (4) stützt, welches mit mechanischen Betriebsvorrichtungen ausgestattet ist, die genannte zweite Antriebswelle (3) stützt ein gesteuertes System (5), das mit mechanischen Betriebsvorrichtungen ausgestattet ist, die mit den genannten ersten mechanischen Betriebsvorrichtungen zusammen arbeiten, das genannte erste Steuersystem (4) hat eine halb-sinusförmige Bewegung, die durch eine Radialbewegung definiert wird, die durch die genannte erste Antriebswelle (2) übertragen wird, und eine Wellenbewegung, die durch das genannte geneigte Endstück (4') übertragen wird, das die mechanischen Betriebsvorrichtungen mit dem genannten gesteuerten System (5) austauscht, das genannte Steuersystem (4) ist **dadurch gekennzeichnet, dass** es durch einen ersten Bolzen oder schwingenden Planetenträger (8) auf einem Ring (7) läuft und dass der genannte Ring (7) auf einem zweiten Bolzen oder schwingenden Planetenträger (8') läuft, der in einem auf einem Schieber (12) angebrachten Zylinder läuft, welcher durch Führungen positioniert wird, die ein Stück mit einem externen Aufnahmegehäuse (20) bilden, das den genannten Drehzahlwandler (1) enthält.

2. Drehzahlwandler (1) gemäß Patentanspruch 1, der **dadurch gekennzeichnet ist, dass** er mindestens eine erste Axialregelvorrichtung der genannten ersten Antriebswelle (2) enthält.

3. Drehzahlwandler (1) gemäß Patentanspruch 2, der **dadurch gekennzeichnet ist, dass** die genannte Axialregelvorrichtung eine erste Gewindebuchse (10) enthält, die Radial- und/oder Axiallager enthält, um die genannte erste Antriebswelle (2) zu drehen.

4. Drehzahlwandler (1) gemäß Patentanspruch 1, der **dadurch gekennzeichnet ist, dass** er mindestens eine zweite Axialregelvorrichtung der genannten zweiten Antriebswelle (3) enthält.

5. Drehzahlwandler (1) gemäß Patentanspruch 4, der **dadurch gekennzeichnet ist, dass** die genannte zweite Axialregelvorrichtung eine zweite Gewindebuchse (13) enthält, die Radial- und/oder Axiallager enthält, um die genannte zweite Antriebswelle (3) zu drehen.

6. Drehzahlwandler (1) gemäß Patentanspruch 1, der **dadurch gekennzeichnet ist, dass** die genannten mechanischen Betriebsvorrichtungen mehrere Rollen (9) sind.

7. Drehzahlwandler (1) gemäß Patentanspruch 1, der **dadurch gekennzeichnet ist, dass** die genannten mechanischen Betriebsvorrichtungen ein erstes verzahntes Rad (25) sind.

8. Drehzahlwandler (1) gemäß Patentanspruch 1, der **dadurch gekennzeichnet ist, dass** die genannten zweiten mechanischen Betriebsvorrichtungen ein erstes verzahntes System (5') sind.

9. Drehzahlwandler (1) gemäß Patentanspruch 1, der **dadurch gekennzeichnet ist, dass** die genannten zweiten mechanischen Betriebsvorrichtungen ein zweites verzahntes Rad (26) sind.

10. Drehzahlwandler (1) gemäß Patentanspruch 1, der **dadurch gekennzeichnet ist, dass** die genannte erste Axialregelvorrichtung durch elektrisch oder elektronisch angetriebene Vorrichtungen gesteuert wird.

## Revendications

1. Variateur de régime en continu mécanique (1) pourvu d'une cinématique de transmission à embrayage frontal comprenant un premier arbre de transmission (2) et un second arbre de transmission (3), ledit premier arbre de transmission (2) étant muni d'une portion terminale inclinée (4') supportant un système de commande (4) possédant des premiers moyens de coopération mécaniques, ledit second arbre de transmission (3) supportant un système commandé (5) possédant des seconds moyens de coopération mécaniques qui coopèrent avec lesdits premiers moyens de coopération mécaniques, ledit premier système de commande (4) ayant un mouvement semi - sinusoïdal, défini par un mouvement radial imprimé par ledit premier arbre de transmission (2), et un mouvement ondulatoire imprimé par ladite portion terminale inclinée (4'), qui change les moyens de coopération mécaniques avec ledit système commandé (5), **caractérisé en ce que** ledit système de commande (4) est fait pivoter sur une bague (7) à travers un premier axe ou porte satellite oscillant (8) et que ladite bague (7) est faite pivoter sur un second axe ou porte satellite oscillant (8') qui glisse dans un cylindre placé sur un curseur (12) positionné par des glissières solidaires avec une boîte de logement extérieure (20) contenant ledit variateur de régime (1).

2. Variateur de régime (1) selon la revendication 1, **caractérisé en ce qu'**il comprend au moins un premier dispositif de réglage axial dudit premier arbre de transmission (2).

3. Variateur de régime (1) selon la revendication 2, **caractérisé en ce que** ledit premier dispositif de réglage axial comprend une première douille filetée (10) contenant des roulements radiaux et/ou axiaux pour faire tourner ledit premier arbre de transmission (2).

4. Variateur de régime (1) selon la revendication 1, **caractérisé en ce qu'**il comprend au moins un second dispositif de réglage axial dudit second arbre de transmission (3).

5. Variateur de régime (1) selon la revendication 4, **caractérisé en ce que** ledit second dispositif de réglage axial comprend une seconde douille filetée (13) contenant des roulements radiaux et/ou axiaux pour faire tourner ledit second arbre de transmission (3).

6. Variateur de régime (1) selon la revendication 1, **caractérisé en ce que** lesdits premiers moyens de coopération mécaniques sont une pluralité de galets (9).

7. Variateur de régime (1) selon la revendication 1, **caractérisé en ce que** lesdits premiers moyens de coopération mécaniques sont une première roue dentée (25).

8. Variateur de régime (1) selon la revendication 1, **caractérisé en ce que** lesdits seconds moyens de coopération mécaniques sont un système denté (5').

9. Variateur de régime (1) selon la revendication 1, **caractérisé en ce** lesdits seconds moyens de coopération mécaniques sont une seconde roue dentée (26).

10. Variateur de régime (1) selon la revendication 1, **caractérisé en ce que** ledit premier dispositif de réglage axial est commandé par des moyens d'actionnement motorisés électriques ou électroniques.
